(19) Europäisches Patentamt
European Patent Office
Office européen des brevets

(11) **EP 3 096 305 B1**

(12) **EUROPÄISCHE PATENTSCHRIFT**

(45) Veröffentlichungstag und Bekanntmachung des Hinweises auf die Patenterteilung:
**11.07.2018   Patentblatt 2018/28**

(21) Anmeldenummer: **15168644.1**

(22) Anmeldetag: **21.05.2015**

(51) Int Cl.:
*G08G 1/097* (2006.01)       *G08G 1/04* (2006.01)
*G08G 1/054* (2006.01)       *G08G 1/052* (2006.01)
*G01S 13/58* (2006.01)       *G01S 17/58* (2006.01)
*G01S 17/66* (2006.01)       *G01S 13/70* (2006.01)
*G01S 13/91* (2006.01)       *G01S 17/88* (2006.01)

(54) **VERFAHREN ZUR GESCHWINDIGKEITSERMITTLUNG VON FAHRZEUGEN MIT SELBSTÄNDIGER PLAUSIBILITÄTSPRÜFUNG**

METHOD FOR SPEED DETECTION FOR VEHICLES HAVING AUTONOMOUS PLAUSIBILITY TEST

PROCÉDÉ DE CALCUL DE VITESSE DE VÉHICULES ET VÉRIFICATION AUTONOME DE PLAUSIBILITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.11.2016   Patentblatt 2016/47**

(73) Patentinhaber: **VITRONIC Dr.-Ing. Stein Bildverarbeitungssysteme GmbH**
**65189 Wiesbaden (DE)**

(72) Erfinder: **Frohn, Heiko, Dr.**
**37120 Bovenden (DE)**

(74) Vertreter: **Neumann Müller Oberwalleney & Partner**
**Patentanwälte**
**Overstolzenstraße 2a**
**50677 Köln (DE)**

(56) Entgegenhaltungen:
**EP-A2- 2 799 903           DE-A1- 10 339 954**
**DE-U1-212006 000 021      US-A- 5 396 234**

**Beschreibung**

Die vorliegende Erfindung betrifft ein Verfahren zur Geschwindigkeitsermittlung von Fahrzeugen auf einer Fahrbahn, bei dem ein erstes Messsystem und ein zweites Messsystem bereitgestellt werden, das erste Messsystem mit einer einen Erfassungsbereich abdeckenden Sensorvorrichtung und einer ersten Zeitmessvorrichtung bereitgestellt wird, wobei das erste Messsystem zu mehreren Zeitpunkten die Entfernung eines sich innerhalb des Erfassungsbereiches bewegenden Fahrzeuges misst und anhand der sich zeitlich ändernden Entfernung eine Fahrgeschwindigkeit des Fahrzeuges ermittelt, und das zweite Messsystem die ermittelte Fahrgeschwindigkeit überprüft.

Um die Geschwindigkeit von Fahrzeugen zu ermitteln, gibt es eine Reihe bekannter Technologien. Beispielsweise können optische Geschwindigkeitsmesssysteme mit einer LiDAR-Sensorvorrichtung (Abkürzung für englisch: Light Detection and Ranging) eingesetzt werden, die innerhalb eines Erfassungsbereiches des Sensors mehrmalig die Entfernung zu Fahrzeugen mittels Laufzeitverfahren (englisch: time of flight, TOF) misst. Beim Prinzip der Laufzeitmessung erzeugt eine Laserdiode der Sensorvorrichtung kurze Laserimpulse, die auf das Fahrzeug projiziert werden. Das vom Fahrzeug reflektierte Licht wird von einem Sensorelement aufgenommen. Über die Laufzeit der Laserimpulse zum Fahrzeug und zurück wird die Entfernung abgeleitet, wobei die Geschwindigkeit des jeweiligen Fahrzeugs anhand der sich zeitlich ändernden Entfernung ermittelt, respektive berechnet wird. Solche LiDAR-Systeme werden zum Beispiel auf Verkehrsinseln, Grünstreifen oder an Straßenüberführungen stationär oder mobil positioniert, um Fahrbahnen einer Straße zu überwachen. Neben LiDAR-Systemen können aber auch andere Technologien, beispielsweise Radarsysteme, die mittels des Dopplereffekts die Geschwindigkeit des Fahrzeuges aus gemessenen Frequenzänderungen zwischen gesendetem und reflektiertem Signal berechnen, oder im Straßenbelag eingebaute Piezokabel oder Induktionsschleifen zur Geschwindigkeitsmessung verwendet werden. Detektieren die bekannten Geschwindigkeitsmesssysteme das Überschreiten einer auf der überwachten Fahrbahn erlaubten Höchstgeschwindigkeit, werden üblicherweise Fotos und/oder Videos der zu schnell fahrenden Fahrzeuge aufgenommen, um eine Ahndung der Geschwindigkeitsüberschreitungen einleiten zu können.

Aus der DE 21 2006 000 021 U1 ist ein Verfahren zur Geschwindigkeitsermittlung von Fahrzeugen auf einer Fahrbahn bekannt, bei dem ein erstes Messsystem und ein zweites Messsystem bereitgestellt werden, das erste Messsystem mit einer einen Erfassungsbereich abdeckenden Sensorvorrichtung und einer ersten Zeitmessvorrichtung bereitgestellt wird, wobei das erste Messsystem zu mehreren Zeitpunkten die Entfernung eines sich innerhalb des Erfassungsbereiches bewegenden Fahrzeuges misst und anhand der sich zeitlich ändernden Entfernung eine Fahrgeschwindigkeit des Fahrzeuges ermittelt, und das zweite Messsystem die ermittelte Fahrgeschwindigkeit überprüft. Aus der US 8,712,105 B2 ist ein weiteres Verfahren zur Geschwindigkeitsermittlung von Fahrzeugen auf einer Fahrbahn bekannt. Die Geschwindigkeit des Fahrzeuges wird mittels einer optischen Sensorvorrichtung, die mit einem LiDAR-Sensor ausgestattet ist, gemessen. Um Messfehler oder Messungenauigkeiten der optischen Sensorvorrichtung ausschließen zu können, wird die gemessene Geschwindigkeit eines vermeintlich zu schnell fahrenden Fahrzeuges in einem zweiten Geschwindigkeitsmessverfahren überprüft. Hierzu werden zeitlich hintereinander zwei Fotos des zu überprüfenden Fahrzeugs aufgenommen. Diese Fotos werden an eine Zentrale übermittelt, in der die Bilder manuell ausgewertet werden. Um mittels der Fotos die Geschwindigkeit überprüfen zu können, wird auf dem zeitlich ersten Foto manuell ein Punkt am zu überprüfenden Fahrzeug ausgewählt. Daraufhin wird auf den beiden Fotos softwaregestützt eine durch den ausgewählten Punkt verlaufende Linie quer zur Fahrbahn grafisch dargestellt. Des Weiteren werden auf dem zweiten Foto zwei weitere quer zur Fahrbahn verlaufende Linien grafisch eingeblendet. Die in Fahrtrichtung betrachtet zweite Linie zeigt eine Wegstrecke an, die das zu überprüfende Fahrzeug unter Einhaltung der zulässigen Höchstgeschwindigkeit hätte erreichen dürfen. Die dritte Linie verdeutlicht dagegen die Strecke, die das Fahrzeug erreicht, wenn die mit dem LiDAR-Sensor gemessene Geschwindigkeit beibehalten wurde. Anschließend werden die Fotos manuell ausgewertet. Wird auf dem zweiten Foto erkannt, dass das Fahrzeug die dritte Linie erreicht hat, wird durch einen Betreiber der Zentrale bestätigt, dass die von dem LiDAR-Sensor gemessene Geschwindigkeit des zu schnell gefahrenen Fahrzeuges korrekt gemessen wurde. Wenn das zu überprüfende Fahrzeug hinter der zweiten Linie zurückbleibt, hat dieses Fahrzeug offensichtlich die zulässige Geschwindigkeit nicht überschritten und die Geschwindigkeitsmessung mittels des LiDAR-Sensors führte augenscheinlich zu einer Fehlmessung.

Als nachteilig wird daran empfunden, dass die Daten, insbesondere die Fotos sämtlicher vorbeifahrender Fahrzeuge, die vermeintlich zu schnell gefahren sind, an eine Zentrale übermittelt werden. Durch die Übertragung der sensiblen Daten an die Zentrale besteht das Risiko, dass Dritte die Daten abgreifen können. Des Weiteren ist das Verfahren durch die manuelle Überprüfung zeit- und personalaufwendig.

Aufgabe der vorliegenden Erfindung ist es daher, ein einfaches, sicheres und sich selbst überprüfendes Verfahren zur Geschwindigkeitsermittlung von Fahrzeugen bereitzustellen.

Die Aufgabe ist erfindungsgemäß mit einem Verfahren zur Geschwindigkeitsermittlung von Fahrzeugen auf einer Fahrbahn der eingangs genannten Art dadurch gelöst, dass das zweite Messsystem mit einer von der ersten Zeitmessvorrichtung unabhängigen zweiten Zeitmessvorrichtung bereitgestellt wird, wobei das zweite Messsystem mittels der Sensorvorrichtung eine virtuelle Einfahrtslinie eines innerhalb des Erfassungsbereiches liegenden Streckenabschnitts überwacht und mittels der zweiten Zeitmessvorrichtung einen Einfahrtszeitpunkt, zu dem die Sensorvorrichtung an der Einfahrtslinie einen Objektpunkt, respektive irgendeinen sich auf der Fahrbahn bewegenden Objektpunkt, erkennt, erfasst, wobei das zweite Messsystem zu wenigstens einem späteren Überprüfungszeitpunkt mittels der Sensorvorrichtung überprüft, ob sich ein Objektpunkt, respektive irgendein sich auf der Fahrbahn bewegender Objektpunkt, innerhalb eines definierten Streckenfensters um eine virtuelle Ausfahrtslinie des Streckenabschnitts befindet.

Der Erfindung liegt somit die Überlegung zugrunde, ein Verfahren bereitzustellen, bei dem neben der Ermittlung der Fahrgeschwindigkeit eines Fahrzeuges auch eine automatisierte, respektive selbständige Plausibilitätsprüfung durchgeführt wird. Mit anderen Worten wird im Rahmen einer primären Messmethode mittels des ersten Messsystems die Fahrgeschwindigkeit möglichst eines jeden auf der Fahrbahn durch den Erfassungsbereich der Sensorvorrichtung fahrenden Fahrzeuges ermittelt und im Rahmen einer sekundären Beweismethode mittels des zweiten Messsystems überprüft, ob die ermittelten Fahrgeschwindigkeiten der einzelnen Fahrzeuge plausibel sein können. Durch das sich erfindungsgemäß selbst überprüfende Verfahren zur Geschwindigkeitsermittlung ist die gerichtliche Verwendbarkeit der ermittelten Fahrgeschwindigkeiten gegeben.

Hierzu schlägt die Erfindung vor, dass die Sensorvorrichtung des ersten Messsystems die Fahrbahn, respektive die Fahrbahnen, welche auch die Fahrbahnen beider Fahrtrichtungen einer Straße umfassen kann, überwacht. Wenn sich ein Fahrzeug innerhalb des Erfassungsbereiches der Sensorvorrichtung bewegt, misst das erste Messsystem im Rahmen der primären Messmethode zu mehreren Zeitpunkten, d.h. zu mindestens zwei unterschiedlichen Zeitpunkten, mittels der Sensorvorrichtung die Entfernung von der Sensorvorrichtung zum jeweiligen Fahrzeug. Zu jeder Entfernungsmessung wird ein von der ersten Zeitmessvorrichtung erfasster Zeitwert als Zeitstempel zum gemessenen Entfernungswert hinterlegt, um anhand der sich zeitlich ändernden Entfernung die Fahrgeschwindigkeit des jeweiligen Fahrzeuges zu ermitteln, respektive zu berechnen.

Erfindungsgemäß überprüft das zweite Messsystem im Rahmen der sekundären Beweismethode selbständig, d.h. ohne manuellen Eingriff, ob die im Rahmen der primären Messmethode ermittelte Fahrgeschwindigkeit des jeweiligen Fahrzeuges plausibel sein kann. Hierzu greift das zweite Messsystem erfindungsgemäß auf die Sensorvorrichtung des ersten Messsystems zu. Allerdings wird für die sekundäre Beweismethode erfindungsgemäß eine von der ersten Zeitmessvorrichtung unabhängige zweite Zeitmessvorrichtung verwendet, um durch die erste Zeitmessvorrichtung bedingte Messfehler oder Messungenauigkeiten ausschließen zu können. Um die sekundäre Beweismethode zu starten, wird mittels der Sensorvorrichtung des ersten Messsystems eine virtuelle Einfahrtslinie eines innerhalb des Erfassungsbereiches der Sensorvorrichtung liegenden Streckenabschnitts überwacht. Sobald ein Objektpunkt, der kein Objektpunkt des Fahrzeuges, dessen ermittelte Fahrgeschwindigkeit auf Plausibilität überprüft werden soll, sein muss, sondern grundsätzlich ein Objektpunkt irgendeines sich auf der Fahrbahn bewegenden Objektes sein kann, die Einfahrtslinie überquert, erfasst das zweite Messsystem mittels der zweiten Zeitmessvorrichtung einen Einfahrtszeitpunkt. Grundsätzlich kann der Streckenabschnitt eine fest vorgegebene Länge oder eine, insbesondere in Abhängigkeit von der ermittelten Fahrgeschwindigkeit, variable Länge aufweisen. Die den Streckenabschnitt begrenzende virtuelle Einfahrtslinie kann bei Installation der Messsysteme vor Ort auf der Fahrbahn eingemessen und über die Sensorvorrichtung softwarebasiert eingelernt werden. Damit entspricht die virtuelle Einfahrtslinie realen Stellen auf der Fahrbahn, wobei die Einfahrtslinie selbst auf der Fahrbahn nicht als Markierung zu sehen ist. Vor allem wenn der Streckenabschnitt eine fest vorgegebene Länge aufweist, kann auch die virtuelle Ausfahrtslinie in analoger Weise softwarebasiert eingelernt werden. Die beiden virtuellen Linien sollten parallel zueinander verlaufen und sich quer über die zu überwachende Fahrbahn erstrecken. Der Abstand zwischen den beiden virtuellen Linien entspricht der Länge des Streckenabschnitts, sodass der Streckenabschnitt in Fahrtrichtung betrachtet eingangsseitig durch die Einfahrtslinie und ausgangsseitig durch die Ausfahrtslinie begrenzt wird.

Sobald das zweite Messsystem den Einfahrtszeitpunkt erfasst hat, überprüft es zu wenigstens einem späteren Überprüfungszeitpunkt mittels der Sensorvorrichtung, ob sich ein Objektpunkt, respektive ein Objektpunkt irgendeines sich auf der Fahrbahn bewegenden Objektes, innerhalb eines definierten Streckenfensters um die virtuelle Ausfahrtslinie des Streckenabschnitts befindet. Um Fehlmessungen zu vermeiden, erstreckt sich das Streckenfenster vorzugsweise nur über die zu überwachende Fahrbahn. Das definierte Streckenfenster um die virtuelle Ausfahrtslinie stellt einen Toleranzbereich dar, in welchem die Sensorvorrichtung Objektpunkte erfasst, sodass Objektpunkte zum wenigstens einen Überprüfungszeitpunkt nicht zwangsweise direkt auf der Ausfahrtslinie sein müssen, um erfasst zu werden. Die Größe des Streckenfensters kann insbesondere ± 10 % der Länge des Streckenabschnitts, der eine fest vorgegebene Länge oder eine variable Länge aufweisen kann, in Fahrtrichtung betrachtet um die virtuelle Ausfahrtslinie betragen. Erfindungsgemäß ist somit vorgesehen, dass die Sensorvorrichtung das zu überprüfende Fahrzeug nicht dauerhaft während der Fahrt durch den Erfassungsbereich beobachten muss, wohl aber kann, um eine Aussage über die Plausibilität der ermittelten Fahrgeschwindigkeit treffen zu können. Vielmehr reichen bereits zwei Zeitpunkte, nämlich der Einfahrtszeitpunkt und ein zeitlich späterer Überprüfungszeitpunkt, aus, um die mittels des ersten Messsystems ermittelte Fahrgeschwindigkeit auf Plausibilität zu überprüfen.

Vorzugsweise ist vorgesehen, dass die Sensorvorrichtung bei Installation der Messsysteme vor Ort statische Objekte im Erfassungsbereich erfasst und hinterlegt. Somit kann die Sensorvorrichtung statische Objekte oder sich neben der Fahrbahn bewegende Objekte von sich auf der Fahrbahn bewegenden Objekten unterscheiden.

Um allerdings mit hinreichender Wahrscheinlichkeit annehmen zu können, dass der an der Einfahrtslinie erfasste Objektpunkt ein Objektpunkt des zu überprüfenden Fahrzeuges ist, kann die zeitliche und räumliche Abfolge der primären Messmethode und der sekundären Beweismethode aufeinander abgestimmt werden. Insbesondere kann die Sensorvorrichtung die virtuelle Einfahrtslinie zeitlich betrachtet, insbesondere zeitlich unmittelbar, im Anschluss an die im Rahmen der primären Messmethode durchgeführte Geschwindigkeitsmessung beobachten. Zudem kann die virtuelle Einfahrtslinie, die den Streckenabschnitt in Fahrtrichtung betrachtet eingangsseitig begrenzt, innerhalb des Erfassungsbereiches der Sensorvorrichtung derart angeordnet sein, dass das zu überprüfende Fahrzeug, insbesondere unmittelbar, nach Abschluss der primären Messmethode, die Einfahrtslinie überqueren würde. Auf diese Weise kann zwischen dem zu überprüfenden Fahrzeug und dem die Einfahrtslinie überquerenden Objektpunkt ein räumlich und zeitlich enger Bezug angenommen werden, sodass es sich mit hinreichender Wahrscheinlichkeit bei dem erfassten Objektpunkt um einen Objektpunkt des zu überprüfenden Fahrzeuges handelt.

Gemäß einem Aspekt der vorliegenden Erfindung kann vorgesehen sein, dass eine Streckenlänge des Streckenabschnitts durch einen definierten Abstand der Ausfahrtslinie zur Einfahrtslinie bekannt ist, und dass basierend auf der bekannten Streckenlänge und der ermittelten Fahrgeschwindigkeit des Fahrzeuges eine prognostizierte Zeitdauer, die das Fahrzeug unter Beibehaltung der ermittelten Fahrgeschwindigkeit zum Passieren des Streckenabschnitts benötigen würde, berechnet wird. Allgemein gilt, dass die Geschwindigkeit der Quotient aus der Strecke und der dafür benötigten Zeit ist. Vorliegend sind die vom ersten Messsystem ermittelte Fahrgeschwindigkeit und die vorgegebene Streckenlänge, die beispielsweise zehn Meter betragen kann, bekannt, sodass die für den Streckenabschnitt benötigte Zeitdauer berechnet werden kann. Dabei handelt es sich um eine geschätzte Zeitdauer, da zur Berechnung der Zeitdauer die ermittelte Fahrgeschwindigkeit als konstant angenommen wird. Weiterhin kann das zweite Messsystem zum wenigstens einen Überprüfungszeitpunkt, welcher der Summe aus dem Einfahrtszeitpunkt und der prognostizierten Zeitdauer entspricht, mittels der Sensorvorrichtung überprüfen, ob sich ein Objektpunkt innerhalb des definierten Streckenfensters um die Ausfahrtlinie befindet. Somit wird basierend auf der erfassten Fahrgeschwindigkeit und der bekannten Streckenlänge abgeschätzt, zu welchem Zeitpunkt das jeweilige Fahrzeug voraussichtlich an der Ausfahrtslinie sein müsste, sodass auf diese Weise ein räumlich und zeitlich enger Bezug zum an der Einfahrtslinie erfassten sich auf der Fahrbahn bewegenden Objekt bzw. dem Objektpunkt des Objektes hergestellt wird. Damit ist mit hinreichender Wahrscheinlichkeit der im Streckenfenster um die Ausfahrtslinie zum Überprüfungszeitpunkt erfasste Objektpunkt dem an der Einfahrtslinie erfassten sich bewegenden Objekt zugehörig. Durch die vorzugsweise räumliche und zeitliche Abstimmung der primären Messmethode und der sekundären Beweismethode kann zudem mit hinreichender Wahrscheinlichkeit angenommen werden, dass der im Streckenfenster um die Ausfahrtslinie erfasste Objektpunkt ein Objektpunkt des zu überprüfenden Fahrzeuges ist. Auf diese Weise wird ein effizientes sich selbst überprüfendes Messverfahren bereitgestellt, bei dem das zweite Messsystem nicht dauerhaft, sondern lediglich zu wenigstens zwei Zeitpunkten, nämlich dem Einfahrtszeitpunkt und dem zumindest einen weiteren Überprüfungszeitpunkt, auf die Sensorvorrichtung zugreifen muss, sodass die Fahrzeuge nicht dauerhaft während der Fahrt durch den Erfassungsbereich beobachten werden müssen.

Gemäß einem weiteren Aspekt der vorliegenden Erfindung kann vorgesehen sein, dass ein Abstand der Ausfahrtslinie zur Einfahrtslinie einer sich proportional zur ermittelten Fahrgeschwindigkeit verhaltenden Streckenlänge des Streckenabschnitts entspricht, wobei basierend auf einem definierten Zeitintervall und der ermittelten Fahrgeschwindigkeit des Fahrzeuges die Streckenlänge, die das Fahrzeug unter Beibehaltung der ermittelten Fahrgeschwindigkeit innerhalb des Zeitintervalls passieren würde, prognostiziert wird. Allgemein gilt, dass die Geschwindigkeit der Quotient aus der Strecke und der dafür benötigten Zeit ist. Vorliegend ist die vom ersten Messsystem ermittelte Fahrgeschwindigkeit und das Zeitintervall bekannt, sodass die Streckenlänge, die unter Annahme einer gleichbleibenden Fahrgeschwindigkeit innerhalb des vorgegebenen Zeitintervalls passiert werden kann, dem Produkt aus der ermittelten Fahrgeschwindigkeit und dem vorgegebenen Zeitintervall entspricht. Insbesondere kann das Zeitintervall einen festen Wert, beispielsweise von einer Sekunde, haben. Alternativ kann das Zeitintervall abhängig von der ermittelten Fahrgeschwindigkeit sein, beispielsweise derart, dass bei einer ermittelten Fahrgeschwindigkeit bis 30 km/h das Zeitintervall 1,2 Sekunden, über 30 km/h bis 50 km/h 0,72 Sekunden, über 50 km/h bis 100 km/h 0,36 Sekunden, über 100 km/h bis 200 km/h 0,18 Sekunden und über 200 km/h 0,1 Sekunde beträgt. Andere sowie mehr oder weniger als die lediglich bespielhaft erwähnten fünf Abstufungen sind ebenso möglich.

Weiterhin kann das zweite Messsystem zum wenigstens einen Überprüfungszeitpunkt, welcher der Summe aus dem Einfahrtszeitpunkt und dem definierten Zeitintervall entspricht, mittels der Sensorvorrichtung überprüfen, ob sich ein Objektpunkt innerhalb des definierten Streckenfensters um die Ausfahrtlinie befindet. Durch die von der ermittelten Fahrgeschwindigkeit abhängige Streckenlänge des Streckenabschnitts überwacht das zweite Messsystem mittels der Sensorvorrichtung das definierte Streckenfenster um die Ausfahrtslinie zum wenigstens einen Überprüfungszeitpunkt und erfasst dabei grundsätzlich irgendeinen sich auf der Fahrbahn bewegenden Objektpunkt. Unter der Annahme, dass sich der an der Einfahrtslinie erfasste Objektpunkt auf dem Streckenabschnitt unter Beibehaltung der erfassten Fahrgeschwindigkeit weiterbewegt, wird ein räumlicher und zeitlicher Zusammenhang des an der Einfahrtslinie erfassten Objekts bzw. des Objektpunkts des sich auf der Fahrbahn bewegenden Objektes zum im Streckenfenster um die Ausfahrtslinie zum Überprüfungszeitpunkt erfassten Objektpunkt hergestellt. Auf diese Weise ist mit hinreichender Wahrscheinlichkeit der im Streckenfenster um die Ausfahrtslinie zum Überprüfungszeitpunkt erfasste Objektpunkt dem an der Einfahrtslinie erfassten sich auf der Fahrbahn bewegenden Objekt zugehörig. Durch die vorzugsweise räumliche und zeitliche Abstimmung der primären Messmethode und der sekundären Beweismethode kann zudem mit hinreichender Wahrscheinlichkeit angenommen werden, dass der im Streckenfenster um die Ausfahrtslinie erfasste Objektpunkt ein Objektpunkt des zu überprüfenden Fahrzeuges ist. Auf diese Weise wird ein effizientes sich selbst überprüfendes Messverfahren bereitgestellt, bei dem das zweite Messsystem nicht dauerhaft, sondern lediglich zu wenigstens zwei Zeitpunkten, nämlich dem Einfahrtszeitpunkt und dem zumindest einen weiteren Überprüfungszeitpunkt, auf die Sensorvorrichtung zugreifen muss, sodass die Fahrzeuge nicht dauerhaft während der Fahrt durch den Erfassungsbereich beobachten werden müssen.

Zweckmäßigerweise wird die ermittelte Fahrgeschwindigkeit des Fahrzeuges durch das zweite Messsystem, insbesondere nur dann, bestätigt, wenn sich ein Objektpunkt innerhalb des definierten Streckenfensters um die virtuelle Ausfahrtlinie zum wenigstens einen Überprüfungszeitpunkt befindet. Somit ist vorgesehen, dass die sekundäre Beweismethode erst dann die mittels der primären Messmethode erfasste Fahrgeschwindigkeit als plausibel erachtet, wenn irgendeinem Objektpunkt eines sich auf der Fahrbahn bewegenden Objektes ein Einfahrtszeitpunkt zugeordnet wurde und zum wenigstens einen Überprüfungszeitpunkt irgendein Objektpunkt eines sich auf der Fahrbahn bewegenden Objektes im Streckenfenster um die Ausfahrtslinie erfasst wurde. Dabei muss der zum Einfahrtszeitpunkt an der Einfahrtslinie oder zum wenigstens einen Überwachungszeitpunkt im Streckenfenster um die Ausfahrtslinie erfasste Objektpunkt weder derselbe Objektpunkt noch ein Objektpunkt des zu überprüfenden Fahrzeuges sein. Wenn sich dagegen kein Objektpunkt innerhalb des definierten Streckenfensters zum wenigstens einen Überprüfungszeitpunkt befindet, kann dies beispielsweise auf eine Fehlmessung der Fahrgeschwindigkeit durch das erste Messsystem oder eine fehlerhafte Messung durch das zweite Messsystem, insbesondere durch die zweite Zeitmessvorrichtung, oder eine abrupte Bremsung des zu überprüfenden Fahrzeuges hinweisen, so dass im Rahmen der sekundären Beweismethode die ermittelte Fahrgeschwindigkeit als falsch oder nicht nachbeweisbar eingestuft wird.

Vorteilhafterweise wird die ermittelte Fahrgeschwindigkeit des Fahrzeuges nur dann durch das zweite Messsystem überprüft, wenn die Fahrgeschwindigkeit größer als eine für die Fahrbahn vorgegebene Höchstgeschwindigkeit ist. Diese Form der Überprüfung stellt ein effizientes Messverfahren zur Geschwindigkeitsüberwachung von Fahrzeugen bereit. Erst wenn die primäre Messmethode ergibt, dass die Fahrgeschwindigkeit des Fahrzeuges über einer zulässigen Höchstgeschwindigkeit liegt, wird die sekundäre Beweismethode initiiert. Wenn dann die Plausibilitätsprüfung ergibt, dass die mit dem ersten Messsystem ermittelte Fahrgeschwindigkeit des Fahrzeuges plausibel ist, können neben der ermittelten Fahrgeschwindigkeit weitere Daten, wie zum Beispiel aufgenommene Bilder und/oder Videos des beweisbar zu schnell gefahrenen Fahrzeugs sowie Ortszeit und Standortangaben der Messsysteme zu einem Beweismitteldatensatz zusammengefasst werden. Wenn dagegen die Plausibilitätsprüfung ergibt, dass die ermittelte Fahrgeschwindigkeit falsch und/oder nicht beweisbar ist, können sämtliche fahrzeugbezogene Daten aus datenschutzrechtlichen Gründen aus den Messsystemen gelöscht werden. Eine solche Löschung kann automatisch vorgenommen werden, sobald das jeweilige Fahrzeug den Erfassungsbereich wieder verlässt.

In bevorzugter Weise ist vorgesehen, dass die Sensorvorrichtung als eine flächenüberwachende oder eine raumüberwachende Sensorvorrichtung bereitgestellt wird. Insbesondere kann die Sensorvorrichtung als eine optische Sensorvorrichtung, insbesondere eine Li-DAR-Sensorvorrichtung mit einer Lasersendeeinheit und einer Laserempfangseinheit bereitgestellt werden, um die Entfernung zu den Fahrzeugen mittels Laufzeitverfahren (englisch: time of flight, TOF) zu messen. Zur Entfernungsmessung befindet sich die Empfangseinheit üblicherweise direkt neben der Sendeeinheit. Um die Entfernung zum jeweiligen Fahrzeug zu messen, wird eine durch das erste Messsystem mittels der ersten Zeitmessvorrichtung erfasste Zeitdifferenz zwischen einer Abstrahlzeit eines Laserimpulses und einer Ankunftszeit der vom Fahrzeug gestreuten bzw. reflektierten Strahlung bestimmt. Zur Messung der Fahrgeschwindigkeit des jeweiligen Fahrzeuges wird dieser Vorgang wenigstens einmal, vorzugsweise mit einer hohen Wiederholungsrate, insbesondere 100-mal pro Sekunde, wiederholt. Um den Erfassungsbereich flächendeckend zu überwachen, kann die Sensorvorrichtung einen Polygonspiegel umfassen, der die insbesondere in schneller Folge gepulsten Laserstrahlen innerhalb des Erfassungsbereiches über die Fahrbahn lenkt. Für jedes Senden eines Laserstrahls wird mittels der ersten Zeitmessvorrichtung ein Zeitstempel gesetzt und gemeinsam mit dem Wert eines Abstrahlwinkels gespeichert. Ebenso kann die Sensorvorrichtung mit einer TOF-Kamera bereitgestellt werden. TOF-Kameras sind raumüberwachende 3D-Kamerasysteme, die ebenfalls mit dem Laufzeitverfahren Entfernungen messen. Der Erfassungsbereich wird mittels Lichtimpulse ausgeleuchtet und die Kamera misst für jeden Bildpunkt die Laufzeit, die das Licht bis zum Fahrzeug und wieder zurück benötigt. Alternativ kann vorgesehen sein, dass die Sensorvorrichtung als eine Radar-Sensorvorrichtung mit einer Radarsendeeinheit und einer Radarempfangseinheit bereitgestellt wird, um die Entfernung zu den Fahrzeugen mittels Laufzeitverfahren zu messen.

Zweckmäßigerweise erstreckt sich der Erfassungsbereich der Sensorvorrichtung in Fahrtrichtung betrachtet über eine Entfernung von 75 Metern, wobei die Fahrgeschwindigkeit der Fahrzeuge in Fahrtrichtung betrachtet in einem Abstand von insbesondere 75 bis 40 Metern zur Sensorvorrichtung gemessen wird. Vorzugsweise wird die Fahrgeschwindigkeit des jeweiligen Fahrzeuges innerhalb des Erfassungsbereichs mehrmalig durch das erste Messsystem ermittelt und aus den ermittelten Fahrgeschwindigkeitswerten ein Mittelwert für das jeweilige Fahrzeug gebildet. Vorzugsweise wird die gemittelte Fahrgeschwindigkeit mittels der sekundären Beweismethode auf deren Plausibilität hin überprüft. Der für die Plausibilitätsprüfung notwendige Streckenabschnitt ist in Fahrtrichtung betrachtet vorzugsweise 10 Meter lang, wobei in Fahrtrichtung betrachtet die virtuelle Einfahrtslinie insbesondere 40 Meter und die virtuelle Ausfahrtslinie insbesondere 30 Meter von der Sensorvorrichtung entfernt quer über die Fahrbahn verlaufen.

Weiterhin können die beiden Messsysteme als eine Messeinrichtung, insbesondere autark, in einem Gehäuse, insbesondere einem stationär aufgebauten säulenförmigen Gehäuse oder einem mobilen, insbesondere tragbaren, kastenartigen Gehäuse, untergebracht sein. Um eine Fernauslesung oder Fernwartung der Messsysteme zu ermöglichen, kann die Messeinrichtung über eine Datenleitung mit einem zentralen Server verbunden sein.

Ein bevorzugtes Ausführungsbeispiel der Erfindung wird in den Zeichnungen dargestellt und nachstehend beschrieben. Hierin zeigt:

Figur 1   eine schematisch dargestellte Messanordnung zur Durchführung eines erfindungsgemäßen Verfahrens gemäß einer Ausführungsform zu einem frühen Zeitpunkt; und

Figur 2   die Messanordnung zur Durchführung des erfindungsgemäßen Verfahrens aus Figur 1 zu einem Überprüfungszeitpunkt.

Die Zeichnung zeigt eine Messanordnung zur Durchführung eines erfindungsgemäßen Verfahrens zur Geschwindigkeitsermittlung von Fahrzeugen 1 auf einer geschwindigkeitsbegrenzten Fahrbahn 2 gemäß einer Ausführungsform der vorliegenden Erfindung. Die Messanordnung dient hier zur digitalen Geschwindigkeitskontrolle der Fahrzeuge 1 auf der hier zweispurig dargestellten Fahrbahn 2, die vereinfacht nur mit einer Richtungsfahrbahn dargestellt ist. Auf einem Seitenstreifen der Fahrbahn 2 ist eine zylindrische Messsäule 3 stationär aufgebaut. In der Messsäule 3 ist eine Messeinrichtung 4 zur Messung der Geschwindigkeit der Fahrzeuge 1 auf der Fahrbahn 2 untergebracht. Die Geschwindigkeit der Fahrzeuge 1 kann ebenso auf einer Straße mit mehreren Richtungsfahrbahnen ermittelt werden. Hierzu kann die Messsäule 3 auf einem Mittelstreifen der Straße stationär aufgebaut sein, wobei dann wenigstens zwei der Messeinrichtungen 4 in der Messsäule 3 untergebracht sind. Auf diese Weise kann jeder Richtungsfahrbahn wenigstens eine der Messeinrichtungen 4 zugeordnet werden.

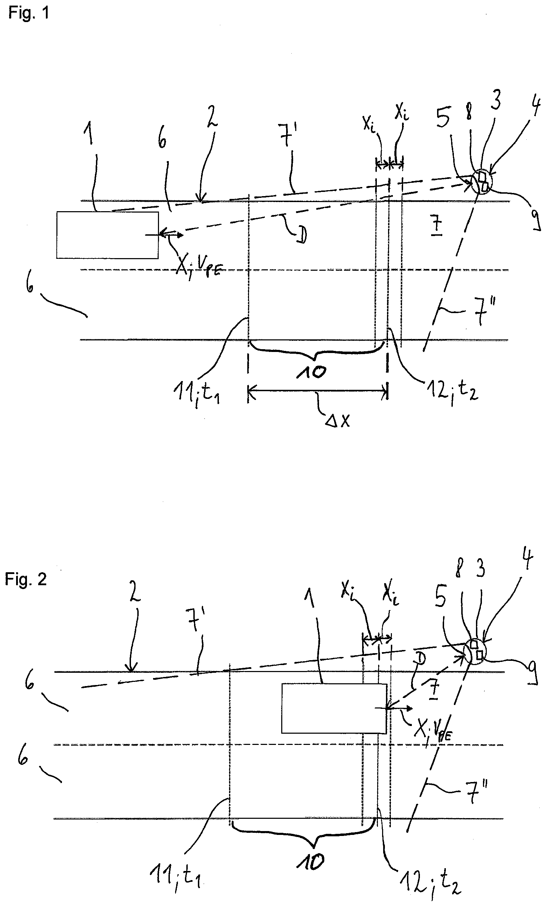

Konkret weist die Messeinrichtung 4 ein erstes Messsystem mit einer Sensorvorrichtung 5 auf, die hier als eine LiDAR-Sensorvorrichtung (Abkürzung für englisch: Light Detection and Ranging) ausgebildet ist. Die Sensorvorrichtung 5 weist eine nicht näher gezeigte Lasersendeeinheit und einen ebenfalls nicht näher gezeigten Polygonspiegel, der durch die Lasersendeeinheit in schneller Folge gepulste Laserstrahlen fächerartig über die Fahrbahn 2 lenkt, auf. Weiterhin umfasst die Sensorvorrichtung 5 eine nicht dargestellte Laserempfangseinheit. Die Lasersendeeinheit, die Laserempfangseinheit und der Polygonspiegel sind derart zur Fahrbahn 2 ausgerichtet, dass die Sensorvorrichtung 5 einen sich über beide Fahrspuren 6 der Fahrbahn 2 erstreckenden Erfassungsbereich 7 flächendeckend abdeckt. Der Erfassungsbereich 7 erstreckt sich in Fahrtrichtung X betrachtet über eine Fahrbahnlänge von 75 Metern und ist in den Figuren 1 und 2 durch die beiden gestrichelten Begrenzungslinien 7', 7" angedeutet. Weiterhin weist das erste Messsystem eine erste Zeitmessvorrichtung 8 auf, sodass für jedes Senden und Empfangen eines Laserstrahls mittels der ersten Zeitmessvorrichtung 8 für die Laufzeitmessung benötigte Zeitstempel gesetzt werden können.

Sobald ein beliebiges Fahrzeug 1, wie in Figur 1 gezeigt, in den Erfassungsbereich 7 einfährt, wird es von der LiDAR-Sensorvorrichtung 5 erfasst. Mittels der Sensorvorrichtung 5 misst das erste Messsystem mehrmalig die Entfernung D zu dem jeweiligen Fahrzeug 1 mittels Laufzeitverfahren (englisch: time of flight, TOF). Hierzu erzeugt die Lasersendeeinheit in an sich bekannter Weise kurze Laserimpulse, die durch den Polygonspiegel über die Fahrspuren 6 gelenkt und somit auch auf das jeweilige Fahrzeug 1 projiziert werden. Für jedes Senden eines Laserstrahls wird mittels der ersten Zeitmessvorrichtung 8 ein Ausgangszeitstempel gesetzt und gemeinsam mit dem Wert eines Abstrahlwinkels des durch den Polygonspiegel umgelenkten Laserstrahls gespeichert. Der vom Fahrzeug 1 reflektierte Laserstrahl wird von der Laserempfangseinheit aufgenommen und ein Einstrahlwinkel mittels der ersten Zeitmessvorrichtung 8 mit einem Eingangszeitstempel versehen. Über die Differenz zwischen Ausgangs- und Eingangszeit, d. h. der Laufzeit der Laserimpulse zum Fahrzeug 1 und zurück, wird die Entfernung D zum jeweiligen Fahrzeug abgeleitet. Um ein möglichst genaues Bewegungsprofil des jeweiligen Fahrzeuges 1 innerhalb des Erfassungsbereiches 7 zu erhalten, wird die Entfernung D zum jeweiligen Fahrzeug 100 mal pro Sekunde gemessen. Anhand der sich zeitlich ändernden Entfernungen berechnet das erste Messsystem die Fahrgeschwindigkeit $v_{pe}$ des jeweiligen Fahrzeuges. Dieser Vorgang wird in Fahrtrichtung X betrachtet bis zu einem Abstand von 40 Metern zur Messeinrichtung 4 mehrfach wiederholt. Aus der Vielzahl der ermittelten Geschwindigkeitswerte bildet das erste Messsystem einen Mittelwert, sodass als Ergebnis der primären Messmethode eine gemittelte Fahrgeschwindigkeit $v_{pe}$ zu jedem Fahrzeug 1 vorliegt. Auch wenn das Verfahren beispielhaft an nur einem Fahrzeug 1 erläutert wird, kann die Messeinrichtung 4 in analoger Weise die Entfernungen D zu mehreren sich gleichzeitig oder nacheinander innerhalb des Erfassungsbereiches 7 befindlichen Fahrzeugen 1 und entsprechend die Fahrtgeschwindigkeiten $v_{pe}$ mehrerer Fahrzeuge 1 gleichzeitig oder nacheinander ermitteln.

Wenn die gemittelte Fahrgeschwindigkeit $v_{pe}$ des jeweiligen Fahrzeuges 1 eine für die Fahrbahn 2 zulässige Höchstgeschwindigkeit überschreitet, überprüft die Messeinrichtung 4 im Rahmen einer sekundären Beweismethode selbständig die ermittelte Fahrgeschwindigkeit $v_{pe}$ auf deren Plausibilität. Zur Durchführung der automatischen Plausibilitätsprüfung wird die Messeinrichtung 4 mit einem zweiten Messsystem bereitgestellt. Das zweite Messsystem weist eine von der ersten Zeitmessvorrichtung 8 unabhängigen zweite Zeitmessvorrichtung 9 auf. Mit anderen Worten zeigen die beiden Zeitmessvorrichtungen 8,9 unabhängig voneinander Zeitwerte, insbesondere die aktuelle Ortszeit, an, die idealerweise auf den beiden Zeitmessvorrichtungen 8,9 identisch ist. Das zweite Messsystem ist mit der Sensorvorrichtung 5 des ersten Messsystems verbunden, sodass das zweite Messsystem auf Daten der Sensorvorrichtung 5 zugreifen kann.

Gemäß einer ersten Möglichkeit wird eine Plausibilitätsprüfung auf einem Streckenabschnitt 10 fester Länge Δx durchgeführt. Hierzu wird der Streckenabschnitt 10 auf einem innerhalb des vom Erfassungsbereich 7 der Sensorvorrichtung 5 abgedeckten Abschnitts der Fahrbahn 2 festgelegt. Der Streckenabschnitt 10 wird in Fahrtrichtung X betrachtet eingangsseitig durch eine virtuelle Einfahrtslinie 11 und ausgangsseitig durch eine virtuelle Ausfahrtslinie 12 begrenzt. Die virtuellen Linien 11,12 können vor Durchführung der Geschwindigkeitsermittlung, beispielsweise bei Installation und wiederholt bei Wartungsarbeiten an der Messeinrichtung 4, vor Ort auf der Fahrbahn 2 eingemessen und über die Sensorvorrichtung 5 im zwei Messsystem softwarebasiert eingelernt werden. Somit entsprechen die virtuellen Linien 11,12 realen Stellen auf der Fahrbahn 2, wobei die Linien 11,12 selbst auf der Fahrbahn 2 nicht als Markierungen zu sehen sind. Die beiden Linien 11,12 werden parallel zueinander eingemessen und erstrecken sich quer über die Fahrbahn 2. In Fahrtrichtung X betrachtet verlaufen hier die Einfahrtslinie 11 mit einem Abstand von 40 Metern und die Ausfahrtlinie 12 mit einem Abstand von 30 Metern zur Messeinrichtung 4, sodass der Abstand zwischen den beiden Linien 11,12 die Länge Ax des Streckenabschnitt 10 mit zehn Meter vorgibt. Durch den vorgegebenen Abstand der beiden Linien 11,12 zueinander kann die Länge Δx des Streckenabschnitts 10 als fester Wert in weitere Berechnungen für die Plausibilitätsprüfung einbezogen werden.

Sobald das erste Messsystem den gemittelten Fahrgeschwindigkeitswert des Fahrzeuges 1 auf der Fahrbahn 2 berechnet hat, überwacht das zweite Messsystem mittels der Sensorvorrichtung 5 die virtuelle Einfahrtslinie 11. Wenn die Sensorvorrichtung 5 irgendeinen sich bewegenden Objektpunkt, der nicht notwendigerweise ein Objektpunkt des zu überprüfenden Fahrzeugs 1 sein muss, nach Abschluss der Geschwindigkeitsermittlung mittels des ersten Messsystems auf der Fahrbahn erkennt, erfasst das zweite Messsystem mittels der zweiten Zeitmessvorrichtung 9 einen Einfahrtszeitpunkt $t_1$. Der Einfahrtszeitpunkt $t_1$ wird dem zu überprüfenden Fahrzeug 1 zugeordnet.

Basierend auf dem erfassten Einfahrtszeitpunkt $t_1$ und der bereits mit der primären Messmethode ermittelten Fahrgeschwindigkeit $v_{pe}$ berechnet das zweite Messsystem eine prognostizierte Zeitdauer $\tau$, die das jeweilige Fahrzeug 1 für den Streckenabschnitt 10 mit einer Länge Δx von zehn Metern benötigen würde. Aus der prognostizierten Zeitdauer $\tau$ und dem erfassten Einfahrtszeitpunkt $t_1$ wird ein Überprüfungszeitpunkt $t_2$ bestimmt. Die Formel lautet hierbei: $t_2 = t_1 + \tau$ mit $\tau = \dfrac{\Delta x}{v_{pe}}$.

Zum Überprüfungszeitpunkt $t_2$ betrachtet das zweite Messsystem mittels der Sensorvorrichtung 5 ein definiertes Streckenfenster $2x_i$ um die Ausfahrtslinie 12. Das Streckenfenster $2x_i$ stellt einen Toleranzbereich dar, der hier ± 10% der Länge Δx des Streckenabschnitts 10, d. h. ± 1 Meter beträgt. Somit betrachtet die Sensorvorrichtung 5 zum Überprüfungszeitpunkt $t_2$ das Streckenfenster $2x_i$ mit einer Länge von zwei Metern um die Ausfahrtslinie 12, d.h. in Fahrtrichtung X betrachtet mit $x_i$ = 1 Meter vor und $x_i$ = 1 Meter hinter der Ausfahrtslinie 12. Wenn die Sensorvorrichtung 5 zum Überprüfungszeitpunkt $t_2$, wie in Figur 2 gezeigt, einen sich bewegenden Objektpunkt, der hierein Objektpunkt des zu überprüfenden Fahrzeuges 1 ist, innerhalb des definierten Streckenfensters $2x_i$ um die Ausfahrtslinie 12 erkennt, wird die durch das erste Messsystem ermittelte Fahrgeschwindigkeit des Fahrzeuges 1 als plausibel erachtet und durch die Plausibilitätsprüfung mittels des zweiten Messsystems als beweisbar eingestuft. Zur Beweissicherung des Geschwindigkeitsverstoßes kann in an sich bekannter Weise wenigstens ein Foto und/oder ein Video des zu schnell fahrenden Fahrzeuges 1 zusammen mit Ortszeit und Standortangaben des Verstoßes zu einem Beweismitteldatensatz zusammengefasst werden.

Wenn sich dagegen kein Objektpunkt eines sich auf der Fahrbahn 2 bewegenden Objektes innerhalb des Streckenfensters $2x_i$ um die Ausfahrtslinie 12 befindet, liegt kein beweisbarer Geschwindigkeitsverstoß vor. Das kann beispielsweise daran liegen, dass das zu überprüfende Fahrzeug 1 im Streckenabschnitt 10 stark abgebremst hat oder die primäre Messmethode mittels des ersten Messsystems zu einer Fehlmessung führte. Im Ergebnis kann dann die im Rahmen der primären Messmethode ermittelte Fahrgeschwindigkeit $v_{pe}$ mit der sekundären Beweismethode nicht bestätigt werden. Für diesen Fall werden sämtliche fahrzeugbezogenen Daten aus datenschutzrechtlichen Gründen aus der Messeinrichtung 4 gelöscht. Eine solche Löschung kann automatisch nach Ablauf einer definierten Zeitspanne, beispielsweise nach einer Minute, vorgenommen werden.

Im Unterschied zur vorgenannten ersten Möglichkeit wird gemäß einer zweiten Möglichkeit eine Plausibilitätsprüfung auf einem Streckenabschnitt 10 variabler Länge $\Delta x$ durchgeführt. Im Gegensatz zur ersten Möglichkeit kann der Abstand zwischen der virtuellen Einfahrtslinie 11 und der virtuellen Ausfahrtslinie 12 in Abhängigkeit von der erfassten Fahrgeschwindigkeit $v_{pe}$ variieren, wobei die Einfahrtslinie 11 einen fest vorgegebenen Abstand von 40 Metern zur Sensorvorrichtung 5 aufweist. Insofern wird vor Durchführung der Geschwindigkeitsermittlung, beispielsweise bei Installation und wiederholt bei Wartungsarbeiten an der Messeinrichtung 4, vor Ort die Einfahrtslinie 11 auf der Fahrbahn 2 eingemessen und über die Sensorvorrichtung 5 im zwei Messsystem softwarebasiert eingelernt. Somit entspricht die virtuelle Einfahrtslinie 11 realen Stellen auf der Fahrbahn 2, wobei grundsätzlich die beiden Linien 11,12 selbst auf der Fahrbahn 2 nicht als Markierungen zu sehen sind.

Sobald das erste Messsystem den gemittelten Fahrgeschwindigkeitswert des Fahrzeuges 1 auf der Fahrbahn 2 berechnet hat, überwacht das zweite Messsystem mittels der Sensorvorrichtung 5 die virtuelle Einfahrtslinie 11. Wenn die Sensorvorrichtung 5 irgendeinen sich auf der Fahrbahn 2 bewegenden Objektpunkt, der nicht notwendigerweise ein Objektpunkt des zu überprüfenden Fahrzeugs 1 sein muss, nach Abschluss der Geschwindigkeitsermittlung mittels des ersten Messsystems erkennt, erfasst das zweite Messsystem mittels der zweiten Zeitmessvorrichtung 9 einen Einfahrtszeitpunkt $t_1$. Der Einfahrtszeitpunkt $t_1$ wird dem zu überprüfenden Fahrzeug 1 zugeordnet.

Aus dem Einfahrtszeitpunkt $t_1$ und einem definierten Zeitintervall $\Delta t$, das beispielsweise bei einer ermittelten Fahrgeschwindigkeit $v_{pe}$ bis 30 km/h 1,2 Sekunden, über 30 km/h bis 50 km/h 0,72 Sekunden, über 50 km/h bis 100 km/h 0,36 Sekunden, über 200 km/h bis 200 km/h 0,18 Sekunden und über 200 km/h 0,1 Sekunde, beträgt, wird ein Überprüfungszeitpunkt $t_2$ bestimmt, zu dem das zweite Messsystem mittels der Sensorvorrichtung 5 überprüft, ob sich irgendein auf der Fahrbahn 2 bewegender Objektpunkt innerhalb des definierten Streckenfensters $2x_i$ um die virtuelle Ausfahrtslinie 12 befindet. Bei einer ermittelten Fahrgeschwindigkeit $v_{pe}$ von beispielsweise 70 km/h entspricht der Überprüfungszeitpunkt $t_2$ somit der Summe aus dem Einfahrtszeitpunkt $t_1$ und dem Zeitintervall $\Delta t$ von 0,36 Sekunden.

Weiterhin wird die von der ermittelten Fahrgeschwindigkeit $v_{pe}$ abhängige Streckenlänge $\Delta x$ prognostiziert, die das Fahrzeug 1 unter Beibehaltung der ermittelten Fahrgeschwindigkeit $v_{pe}$ innerhalb des vorgegebenen Zeitintervalls $\Delta t$ zurücklegen würde. Bei einer ermittelten Fahrgeschwindigkeit $v_{pe}$ von 70 km/h würde das Fahrzeug 1 innerhalb von dem vorgegebenen Zeitintervall $\Delta t$ von hier 0,36 Sekunden eine Streckenlänge $\Delta x$ von 7 Metern fahren.

Zum Überprüfungszeitpunkt $t_2$ betrachtet das zweite Messsystem mittels der Sensorvorrichtung 5 das definierte Streckenfenster $2x_i$ um die Ausfahrtslinie 12. Das Streckenfenster $2x_i$ stellt einen Toleranzbereich dar, der hier $\pm$ 10% der geschwindigkeitsabhängigen Länge $\Delta x$ des Streckenabschnitts 10 beträgt. D.h. bei einer ermittelten Fahrgeschwindigkeit $v_{pe}$ von hier 70 km/h weist das Streckenfenster $2x_i$ eine Länge von 1,4 Metern auf. Somit betrachtet die Sensorvorrichtung 5 zum Überprüfungszeitpunkt $t_2$ das Streckenfenster $2x_i$ mit einer Länge von 1,4 Metern um die Ausfahrtslinie 12, d.h. in Fahrtrichtung X betrachtet mit $x_i$ = 0,7 Meter vor und $x_i$ = 0,7 Meter hinter der Ausfahrtslinie 12. Wenn die Sensorvorrichtung 5 zum Überprüfungszeitpunkt $t_2$, wie in Figur 2 gezeigt, irgendeinen sich auf der Fahrbahn 2 bewegenden Objektpunkt innerhalb des definierten Streckenfensters $2x_i$ um die Ausfahrtslinie 12 erkennt, wird die durch das erste Messsystem ermittelte Fahrgeschwindigkeit des Fahrzeuges 1 als plausibel erachtet und durch die Plausibilitätsprüfung mittels des zweiten Messsystems als beweisbar eingestuft. Zur Beweissicherung des Geschwindigkeitsverstoßes kann in an sich bekannter Weise wenigstens ein Foto und/oder ein Video des zu schnell fahrenden Fahrzeuges 1 zusammen mit Ortszeit und Standortangaben des Verstoßes zu einem Beweismitteldatensatz zusammengefasst werden.

Wenn sich dagegen kein Objektpunkt eines sich auf der Fahrbahn 2 bewegenden Objektes innerhalb des Streckenfensters $2x_i$ um die Ausfahrtslinie 12 befindet, liegt kein beweisbarer Geschwindigkeitsverstoß vor. Das kann beispielsweise daran liegen, dass das zu überprüfende Fahrzeug 1 im Streckenabschnitt 10 stark abgebremst hat oder die primäre Messmethode mittels des ersten Messsystems zu einer Fehlmessung führte. Im Ergebnis kann dann die im Rahmen der primären Messmethode ermittelte Fahrgeschwindigkeit $v_{pe}$ mit der sekundären Beweismethode nicht bestätigt werden. Für diesen Fall werden sämtliche fahrzeugbezogenen Daten aus datenschutzrechtlichen Gründen aus der Messeinrichtung 4 gelöscht. Eine solche Löschung kann automatisch nach Ablauf einer definierten Zeitspanne, beispielsweise nach einer Minute, vorgenommen werden.

Bezugszeichenliste

| 1 | Fahrzeug |
| 2 | Fahrbahn |
| 3 | Messsäule |
| 4 | Messeinrichtung |
| 5 | Sensorvorrichtung |
| 6 | Fahrspur |
| 7 | Erfassungsbereich |
| 8 | erste Zeitmessvorrichtung |
| 9 | zweite Zeitmessvorrichtung |
| 10 | Streckenabschnitt |
| 11 | Einfahrtslinie |
| 12 | Ausfahrtslinie |
| $2x_i$ | Streckenfenster |
| D | Entfernung |
| $\Delta x$ | Streckenlänge |
| $t_1$ | Einfahrtszeitpunkt |
| $t_2$ | Überprüfungszeitpunkt |
| $v_{pe}$ | Fahrgeschwindigkeit |
| X | Fahrtrichtung |

**Patentansprüche**

1. Verfahren zur Geschwindigkeitsermittlung von Fahrzeugen (1) auf einer Fahrbahn (2), bei dem ein erstes Messsystem und ein zweites Messsystem bereitgestellt werden, das erste Messsystem mit einer einen Erfassungsbereich (7) abdeckenden Sensorvorrichtung (5) und einer ersten Zeitmessvorrichtung (8) bereitgestellt wird, wobei das erste Messsystem zu mehreren Zeitpunkten die Entfernung (D) eines sich innerhalb des Erfassungsbereiches (7) bewegenden Fahrzeuges (1) misst und anhand der sich zeitlich ändernden Entfernung (D) eine Fahrgeschwindigkeit ($v_{pe}$) des Fahrzeuges (1) ermittelt, und das zweite Messsystem die ermittelte Fahrgeschwindigkeit ($v_{pe}$) überprüft, **dadurch gekennzeichnet,** **dass** das zweite Messsystem mit einer von der ersten Zeitmessvorrichtung (8) unabhängigen zweiten Zeitmessvorrichtung (9) bereitgestellt wird, wobei das zweite Messsystem mittels der Sensorvorrichtung (5) eine virtuelle Einfahrtslinie (11) eines innerhalb des Erfassungsbereiches (7) liegenden Streckenabschnitts (10) überwacht und mittels der zweiten Zeitmessvorrichtung (9) einen Einfahrtszeitpunkt ($t_1$), zu dem die Sensorvorrichtung (5) an der Einfahrtslinie (11) einen Objektpunkt erkennt, erfasst, wobei das zweite Messsystem zu wenigstens einem späteren Überprüfungszeitpunkt ($t_2$) mittels der Sensorvorrichtung (5) überprüft, ob sich ein Objektpunkt innerhalb eines definierten Streckenfensters ($2x_i$) um eine virtuelle Ausfahrtslinie (12) des Streckenabschnitts (10) befindet.

2. Verfahren nach Anspruch 1, **dadurch gekennzeichnet,** **dass** eine Streckenlänge ($\Delta x$) des Streckenabschnitts (10) durch einen definierten Abstand der Ausfahrtslinie (12) zur Einfahrtslinie (11) bekannt ist, und dass basierend auf der bekannten Streckenlänge ($\Delta x$) und der ermittelten Fahrgeschwindigkeit ($v_{pe}$) des Fahrzeuges (1) eine prognostizierte Zeitdauer, die das Fahrzeug (1) unter Beibehaltung der ermittelten Fahrgeschwindigkeit ($v_{pe}$) zum Passieren des Streckenabschnitts (10) benötigen würde, berechnet wird.

3. Verfahren nach Anspruch 2, **dadurch gekennzeichnet,** **dass** das zweite Messsystem zum wenigstens einen Überprüfungszeitpunkt ($t_2$), welcher der Summe aus dem Einfahrtszeitpunkt ($t_1$) und der prognostizierten Zeitdauer entspricht, mittels der Sensorvorrichtung (5) überprüft, ob sich ein Objektpunkt innerhalb des definierten Streckenfensters ($2x_i$) um die Ausfahrtlinie (12) befindet.

4. Verfahren nach Anspruch 1, **dadurch gekennzeichnet,** **dass** ein Abstand der Ausfahrtslinie (12) zur Einfahrtslinie (11) einer sich proportional zur ermittelten Fahrgeschwindigkeit ($v_{pe}$) verhaltenden Streckenlänge ($\Delta x$) des Streckenabschnitts (10) entspricht, wobei basierend auf einem definierten Zeitintervall und der ermittelten Fahrgeschwindigkeit ($v_{pe}$) des Fahrzeuges (1) die Streckenlänge ($\Delta x$), die das Fahrzeug (1) unter Beibehaltung der ermittelten Fahrgeschwindigkeit ($v_{pe}$) innerhalb des Zeitintervalls passieren würde, prognostiziert wird.

5. Verfahren nach Anspruch 4, **dadurch gekennzeichnet,** **dass** das zweite Messsystem zum wenigstens einen Überprüfungszeitpunkt ($t_2$), welcher der Summe aus dem Einfahrtszeitpunkt ($t_1$) und dem definierten Zeitintervall entspricht, mittels der Sensorvorrichtung (5) überprüft, ob sich ein Objektpunkt innerhalb des definierten Streckenfensters ($2x_i$) um die Ausfahrtlinie (12) befindet.

6. Verfahren nach einem der vorherigen Ansprüche, **dadurch gekennzeichnet, dass** die ermittelte Fahrgeschwindigkeit ($v_{pe}$) des Fahrzeuges (1) durch das zweite Messsystem bestätigt wird, wenn sich ein Objektpunkt innerhalb des definierten Streckenfensters

$(2x_i)$ um die virtuelle Ausfahrtlinie (12) zum wenigstens einen Überprüfungszeitpunkt ($t_2$) befindet.

7. Verfahren nach einem der vorherigen Ansprüche, **dadurch gekennzeichnet, dass** die ermittelte Fahrgeschwindigkeit ($v_{pe}$) des Fahrzeuges (1) nur dann durch das zweite Messsystem überprüft wird, wenn die Fahrgeschwindigkeit ($v_{pe}$) größer als eine für die Fahrbahn (2) vorgegebene Höchstgeschwindigkeit ist.

8. Verfahren nach einem der vorherigen Ansprüche, **dadurch gekennzeichnet, dass** die Sensorvorrichtung (5) als eine flächenüberwachende oder eine raumüberwachende Sensorvorrichtung bereitgestellt wird.

9. Verfahren nach einem der vorherigen Ansprüche, **dadurch gekennzeichnet, dass** die Sensorvorrichtung (5) als eine LiDAR-Sensorvorrichtung oder eine Radar-Sensorvorrichtung mit einer Sendeeinheit und einer Empfangseinheit bereitgestellt wird, um die Entfernung (D) zu dem Fahrzeug (1) mittels Laufzeitverfahren zu messen.

## Claims

1. Method for determining the speed of vehicles (1) on a roadway (2), in which a first measuring system and a second measuring system are provided, the first measuring system is provided with a sensor device (5) covering a detection area (7) and a first time measuring device (8), wherein the first measuring system measures at several points of time the distance (D) of a vehicle (1) moving within the detection area (7) and determines by means of the distance (D), changing over time, a driving speed ($v_{pe}$) of the vehicle (1), and the second measuring system checks the determined driving speed ($v_{pe}$),

**characterised in**

**that** the second measuring system is provided with a second time measuring device (9) being independent of the first time measuring device (8), wherein the second measuring system monitors by means of the sensor device (5) a virtual entry line (11) of a roadway section (10) situated within the detection area (7) and records by means of the second time measuring device (9) an entry point of time ($t_1$), at which the sensor device (5) detects an object point at the entry line (11), wherein the second measuring system checks at least at a later check point of time ($t_2$) by means of the sensor device (5), whether an object point is within a defined section window ($2x_i$) around a virtual exit line (12) of the roadway section (10).

2. Method according to claim 1,

**characterised in**

**that** a section length ($\Delta x$) of the roadway section (10) is known by a defined distance of the exit line (12) to the entry line (11), and

**that** based on the known section length ($\Delta x$) and the determined driving speed ($v_{pe}$) of the vehicle (1) a predicted time interval, which the vehicle (1) would need for passing the roadway section (10) when maintaining the constant determined driving speed ($v_{pe}$), is calculated.

3. Method according to claim 2,

**characterised in**

**that** the second measuring system checks at the at least one check point of time ($t_2$), which corresponds to the sum of the entry point of time ($t_1$) and the predicted time interval, by means of the sensor device (5), whether an object point is within the defined section window ($2x_i$) around the exit line (12).

4. Method according to claim 1,

**characterised in**

**that** a distance of the exit line (12) to the entry line (11) corresponds to a section length ($\Delta x$) of the roadway section (10), which behaves proportional to the determined driving speed ($v_{pe}$), wherein, based on a defined time interval and the determined driving speed ($v_{pe}$) of the vehicle (1), the section length ($\Delta x$) is predicted, which the vehicle (1) would pass when maintaining the determined driving speed ($v_{pe}$) within the time interval.

5. Method according to claim 4,

**characterised in**

**that** the second measuring system checks at least at the one check point of time ($t_2$), which corresponds to the sum of the entry point of time ($t_1$) and the defined time interval, by means of the sensor device (5), whether an object point is within the defined section window ($2x_i$) around the exit line (12).

6. Method according to one of the preceding claims,

**characterised in**

**that** the determined driving speed ($v_{pe}$) of the vehicle (1) is confirmed by the second measuring system, when an object point is within the defined section window ($2x_i$) around the virtual exit line (12) at least at the one check point of time ($t2$).

7. Method according to one of the preceding claims,

**characterised in**

**that** the determined driving speed ($v_{pe}$) of the vehicle (1) is only checked by the second measuring system, if the driving speed ($v_{pe}$) is larger than a given maximum speed limit on the roadway (2).

8. Method according to one of the preceding claims,

**characterised in**

**that** the sensor device (5) is provided as an area-wide monitoring or space-monitoring sensor device.

9. Method according to one of the preceding claims, **characterised in**

**that** the sensor device (5) is provided as a LiDAR-sensor device or a radar-sensor device with a transmitter unit and a receiver unit in order to measure the distance (D) to the vehicle (1) by means of a time of flight method.

## Revendications

1. Procédé de détermination de la vitesse de véhicules (1) sur une chaussée (2), dans lequel

un premier système de mesure et un second système de mesure sont mis à disposition,

le premier système de mesure est mis à disposition avec un dispositif de détection (5) couvrant une zone de détection (7) et un premier dispositif de mesure de temps (8), le premier système de mesure mesurant à plusieurs moments l'éloignement (D) d'un véhicule (1) se déplaçant dans la zone de détection (7) est déterminant, à partir de l'éloignement (D) variant dans le temps, une vitesse de circulation ($v_{pe}$) du véhicule (1), et

le second système de mesure contrôlant la vitesse de circulation ($v_{pe}$) déterminée,

**caractérisé en ce que**

le second système de mesure est mis à disposition avec un second dispositif de mesure de temps (9) indépendant du premier dispositif de mesure de temps (8), le second système de mesure surveillant, au moyen du dispositif de détection (5), une ligne d'entrée (11) virtuelle d'un tronçon de parcours (10) se trouvant dans la zone de détection (7) et détectant, au moyen du second dispositif de mesure de temps (9), un moment d'entrée ($t_1$) auquel le dispositif de détection (5) détecte au niveau de la ligne d'entrée (11) un point d'objet, le second système de mesure contrôlant, à au moins un moment de contrôle ultérieur ($t_2$) et au moyen du dispositif de détection (5), si un point objet se trouve dans une fenêtre de parcours définie ($2x_i$) autour d'une ligne de sortie virtuelle (12) du tronçon de parcours (10).

2. Procédé selon la revendication 1, **caractérisé en ce qu'**une longueur de parcours ($\Delta x$) du tronçon de parcours (10) est connue par une distance définie entre la ligne de sortie (12) et la ligne d'entrée (11) et que, en se basant sur la longueur de parcours connue ($\Delta x$) et la vitesse de circulation déterminée ($v_{pe}$) du véhicule (1), une durée prévisionnelle dont le véhicule (1) aurait besoin, en conservant la vitesse de circulation déterminée ($v_{pe}$), pour parcourir le tronçon de parcours (10) est calculée.

3. Procédé selon la revendication 2, **caractérisé en ce que** le second système de mesure contrôle, à au moins un moment de contrôle ($t_2$) qui correspond à la somme du moment d'entrée ($t_1$) et de la durée prévisionnelle, au moyen du dispositif de détection (5), si un point d'objet se trouve dans la fenêtre de parcours ($2x_i$) autour de la ligne de sortie (12).

4. Procédé selon la revendication 1, **caractérisé en ce qu'**une distance entre la ligne de sortie (12) et la ligne d'entrée (11) correspond à une longueur de parcours ($\Delta x$) réagissant proportionnellement à la vitesse de circulation déterminée ($v_{pe}$) du tronçon de parcours (10), sachant que, en se basant sur un intervalle de temps défini et sur la vitesse de circulation déterminée ($v_{pe}$) du véhicule (1), la longueur de parcours ($\Delta x$) que le véhicule (1) parcourrait en conservant la vitesse de circulation déterminée ($v_{pe}$) pendant l'intervalle de temps est pronostiquée.

5. Procédé selon la revendication 4, **caractérisé en ce que** le second système de mesure contrôle, à au moins un moment de contrôle ($t_2$) qui correspond à la somme du moment d'entrée ($t_1$) et de l'intervalle de temps défini, au moyen du dispositif de détection (5), si un point d'objet se trouve dans la fenêtre de parcours définie ($2x_i$) autour de la ligne de sortie (12).

6. Procédé selon une des revendications précédentes, **caractérisé en ce que** la vitesse de circulation déterminée ($v_{pe}$) du véhicule (1) est confirmée par le second système de mesure si un point d'objet se trouve dans la fenêtre de parcours définie ($2x_i$) autour de la ligne de sortie virtuelle (12) à au moins un moment de contrôle ($t_2$) .

7. Procédé selon une des revendications précédentes, **caractérisé en ce que** la vitesse de circulation déterminée ($v_{pe}$) du véhicule n'est contrôlée par le second système de mesure que si la vitesse de circulation ($v_{pe}$) est supérieure à une vitesse maximale prédéfinie pour la chaussée (2).

8. Procédé selon une des revendications précédentes, **caractérisé en ce que** le dispositif de détection (5) est mis à disposition sous forme d'un dispositif de détection contrôlant la surface ou contrôlant l'espace.

9. Procédé selon une des revendications précédentes, **caractérisé en ce que** le dispositif de détection (5) est mis à disposition sous forme d'un dispositif de détection LiDAR ou d'un dispositif de détection à radar équipé d'une unité d'émission et d'une unité de réception pour mesurer l'éloignement (D) par rapport au véhicule (1) au moyen d'un procédé temporel.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 212006000021 U1
- US 8712105 B2